(19) Europäisches Patentamt
European Patent Office
Office européen des brevets

(11) **EP 3 844 459 B1**

(12) **EUROPÄISCHE PATENTSCHRIFT**

(45) Veröffentlichungstag und Bekanntmachung des Hinweises auf die Patenterteilung:
**07.09.2022** **Patentblatt 2022/36**

(21) Anmeldenummer: **19752656.9**

(22) Anmeldetag: **30.07.2019**

(51) Internationale Patentklassifikation (IPC):
**G01D 5/20** *(2006.01)* **G01D 21/00** *(2006.01)*
**H01F 38/14** *(2006.01)* **G01D 11/24** *(2006.01)*

(52) Gemeinsame Patentklassifikation (CPC):
**G01D 5/204; G01D 21/00; H01F 38/14;**
G01D 11/245; H01F 2038/143

(86) Internationale Anmeldenummer:
**PCT/EP2019/070463**

(87) Internationale Veröffentlichungsnummer:
**WO 2020/043414 (05.03.2020 Gazette 2020/10)**

(54) **SENSOR UND SENSORANORDNUNG**

SENSOR AND SENSOR ARRANGEMENT

DÉTECTEUR ET SYSTÈME DE DÉTECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2018 DE 102018120878**

(43) Veröffentlichungstag der Anmeldung:
**07.07.2021 Patentblatt 2021/27**

(73) Patentinhaber: **Endress + Hauser Conducta GmbH+Co. KG**
**70839 Gerlingen (DE)**

(72) Erfinder:
• **SCHEIBE, Sven-Matthias**
**01468 Reichenberg (DE)**
• **PILZ, Stefan**
**04643 Geithain (DE)**

(74) Vertreter: **Kratt-Stubenrauch, Kai Michael**
**Endress+Hauser Group Services**
**(Deutschland) AG+Co. KG**
**Colmarer Straße 6**
**79576 Weil am Rhein (DE)**

(56) Entgegenhaltungen:
WO-A1-2010/049299     DE-A1- 2 913 576
DE-A1- 3 014 485       DE-A1-102006 030 962
DE-A1-102006 056 175

• SCHILLIG J B ET AL: "Design and testing of a 320 MW pulsed power supply", INDUSTRY APPLICATIONS CONFERENCE, 1997. THIRTY-SECOND IAS ANNUAL MEETI NG, IAS '97., CONFERENCE RECORD OF THE 1997 IEEE NEW ORLEANS, LA, USA 5-9 OCT. 1997, NEW YORK, NY, USA,IEEE, US, Bd. 2, 5. Oktober 1997 (1997-10-05), Seiten 1600-1607, XP010248534, DOI: 10.1109/IAS.1997.629065 ISBN: 978-0-7803-4067-1

## Beschreibung

Die Erfindung betrifft einen Sensor, eine Sensoranordnung mit einem solchen, die Verwendung eines solchen und ein Verfahren zum Betreiben eines solchen.

Bekannt sind Sensoren, die mittels einer induktiven Schnittstelle an ein Kabel angeschlossen werden. Bekannt sind beispielsweise Produkte, welche die Anmelderin unter dem Namen "Memosens" verkauft. Kabel und Sensor bilden eine Einheit und sind nur als jeweilige Einheit für einen Bereich mit Explosionsgefahr zertifiziert. Man spricht hier vom Ex-Bereich. Die ATEX-Produktrichtlinie 2014/34/EU und die ATEX-Betriebsrichtlinie 1999/92/EG stellen dabei zwei Richtlinien auf dem Gebiet des Explosionsschutzes dar. In den USA gibt es ähnliche Vorgaben, etwa den National Electrical Code (NEC). Explosionsgefährdete Bereiche werden nach Häufigkeit und Dauer des Auftretens von gefährlicher explosionsfähiger Atmosphäre in Zonen unterteilt, beispielsweise in Zone 0 und 1 für Gase bzw. 20 und 21 für Stäube. Beim Umgang mit Stoffen, die mit Sauerstoff reagieren können, ist immer dann mit einer Explosionsgefahr zu rechnen, wenn in einem Raumvolumen der brennbare Stoff mit einem bestimmten Partialdruck oder als feinkörniger Staub in der Luft vorliegt. Ein explosives Gas-Luft-Gemisch liegt dann vor, wenn der Anteil des brennbaren Gases oder einer verdampften Flüssigkeit zwischen der unteren und oberen Explosionsgrenze liegt. Bei Stäuben muss für das Auftreten einer explosionsfähigen Atmosphäre eine ausreichend geringe Größe der Staubkörner und eine Mindestdichte vorliegen.

Geräte, die in explosionsgefährdeten Zonen verwendet werden können, werden verschiedenartig eingeteilt. Eine Einteilung ist etwa die Temperaturklasse oder die Zündschutzart. Dabei muss durch technische Maßnahmen sichergestellt sein, dass entsprechend der Eingruppierung eines unterstellten explosiven Gemisches keine Zündquelle wirken kann. Zu erwähnen ist hier die Zündschutzart "Eigensicherheit" oder "Ex-i" (intrinsic safety).

Wie erwähnt ist nur jeweils eine bestimmte Kombination von Sensor und Kabel für den Ex-Bereich zugelassen (zertifiziert). Die Auslegung, d. h. die Auswahl der Bauteile und der Schaltung an sich, der Elektronik auf der Seite des Kabels (man spricht von der "Primärseite") und der Elektronik auf der Seite des Sensors (man spricht von der "Sekundärseite") wird unter dieser Annahme durchgeführt. Eine Grundannahme dabei ist, dass sich sowohl die Primärseite als auch die Sekundärseite "gegenseitig kennen". Die sekundärseitigen Eingangsparameter, wie zum Beispiel maximale Spannung oder maximale Leistung werden durch die Primärseite vorgegeben und begrenzt.

Die Patentschrift DE 19719730 beschreibt eine induktive Kopplung, wobei auf der Primärseite eine Schaltung zur Leistungsbegrenzung offenbart wird. Weiterhin wird hier eine sogenannte Überwachungsschaltung genannt, welche die Leistungsbegrenzungsschaltungen, entsprechend der durch die Überwachungsschaltung ermittelten Eigenschaften der Sekundärseite, einstellen kann. Hierbei wird durch nicht näher ausgeführte sekundärseitige Maßnahmen ein Signal an die Primärseite gesendet. Im Falle einer erfolgreich erkannten Sekundärseite wird entsprechend entschieden, auf welche Leistungsbegrenzung eingestellt werden soll. Dafür muss zwischen der Überwachungsschaltung und der Sekundärseite eine gemeinsame Datenbasis bestehen. Auch hierbei müssen sich die Primärseite und die Sekundärseite "kennen". Auch hier werden die sekundärseitigen Eingangsparameter primärseitig begrenzt.

Die DE102006056175 offenbart eine Messanordnung zum Erfassen chemischer und/oder physikalischer Messgrößen.

Eine aktive Steuerung der Leistungsbegrenzung ist aus Ex-Sicht aufwendig. Es werden viele Bauelemente und damit sehr viel Leiterkartenplatz benötigt. Weiterhin ist es fraglich, ob eine Zertifizierungsstelle für weltweite lokale Ex-Zertifizierungen diese Technik akzeptiert.

Zur Auslegung und Berechnung der Eigensicherheit von Primärseite oder Sekundärseite ist immer jeweils die andere Seite zu berücksichtigen. Jede Seite ist der anderen Seite immer bekannt.

Der Erfindung liegt die Aufgabe zugrunde, einen Sensor (Sekundärseite) bereit zu stellen, der unabhängig von der Kabelschaltung (Primärseite) Ex-technisch betrachtet werden kann.

Die Aufgabe wird gelöst durch einen Sensor, umfassend: zumindest ein Sensorelement, das zumindest eine Messgröße erfasst, wobei das Sensorelement in elektrischem Kontakt mit einer Sensorschaltung steht; die Sensorschaltung, die von Daten von einer Sekundärspule und/oder von der Messgröße abgeleitete Werte verarbeitet, wobei die Sensorschaltung in elektrischem Kontakt mit einer Ex-Schaltung steht, wobei die Sensorschaltung mit einer maximalen Eingangsspannung und einem maximalen Eingangsstrom beaufschlagt wird; und die Ex-Schaltung, umfassend: die Sekundärspule, die ein elektrisches Signal von einer der Sekundärspule zugeordneten Primärspule empfängt; wobei das elektrische Signal die, insbesondere auf das elektrische Signal aufgeprägte, insbesondere aufmodulierte, Daten umfasst; eine Spannungsbegrenzung, welche die Spannung des elektrischen Signals auf die maximale Eingangsspannung der Sensorschaltung begrenzt; und eine Strombegrenzung, welche den Strom des elektrischen Signals auf den maximalen Eingangsstrom der Sensorschaltung begrenzt.

In anderen Worten werden die Eingangsparameter der Sekundärseite auch ausschließlich sekundärseitig begrenzt. Der Sensor kann im Ex-Bereich eingesetzt werden, wenn die primärseitig abgegebene Leistung unter oder gleich einer maximalen Eingangsleitung der Sekundärseite liegt. Dadurch wird sozusagen eine Ex-Schnittstelle in die induktive Kopplung gelegt. Der Anwender braucht sich bis auf diesen Parameter - die Ex-Fähigkeit des Kabels und des Sensors vorausgesetzt - keine Gedanken um die Ex-Fähigkeit der Sensoranordnung (bestehend aus Sensor und Kabel) an sich zu machen. Die Primärseite der Kopplung, speziell das Kabel ist durch ein erstes Ex-Zertifikat zertifiziert. In diesem Zertifikat wird die maximal übertragbare Leistung angegeben. In einem zweiten Zertifikat wird der (die) Sensor(en) durch Angabe der Eingangsleistung Pi zertifiziert. Dadurch ist es möglich beliebige Kombinationen von Sensor und Kabel, die jeweils für sich über ein Ex-Zertifikat verfügen, zu verwenden. Dies ist möglich über die Ex-Maßnahmen, also insbesondere die Ex-Schaltung, auf Sekundärseite und die Angabe einer maximal zu übertragenden Leistung von Primär- zur Sekundärseite, welche kleiner ist oder gleich als die maximale Eingangsleistung der Sekundärseite. Aufgrund von verschiedenen möglichen Spannungs-Strom-Eingangskennlinien des Sensors, zum Beispiel eine trapezoide Kennlinie, kann die Eingangsleistung Pi nicht in jedem Fall aus dem Produkt aus maximaler Eingangsspannung und maximalem Eingangsstrom berechnet werden.

In einer Ausgestaltung ist mittels der maximalen Eingangsspannung und des maximalen Eingangsstroms die Eigensicherheit der Sensorschaltung ausgelegt.

Die Spannungsbegrenzung ist in einer Ausgestaltung so ausgelegt, dass die funktionalen Anforderungen der Sensorschaltung nicht oder minimal gestört werden. So ist die Spannung an der Spannungsbegrenzung in der Größenordnung der Eingangsspannung der Sensorschaltung bzw. die Spannung an der Spannungsbegrenzung ist etwas größer als die Eingangsspannung der Sensorschaltung.

In einer Ausgestaltung umfasst die Spannungsbegrenzung zumindest eine Diode, bevorzugt drei Dioden. In einer Ausgestaltung handelt es sich dabei um Z-Dioden, die in Sperrrichtung betrieben werden. Die Diode(n) sind so ausgelegt, dass die Sperrspannung, also die Spannung an der Spannungsbegrenzung, höher ist als die Eingangsspannung der Sensorschaltung. Dies ist vorteilhaft, da ab einer gewissen Sperrspannung, der Durchbruchspannung, der Strom durch die Diode unerwünscht um viele Größenordnungen ansteigt und Verlustleistung hervorruft. In einer Ausgestaltung ist die Spannungsbegrenzung mittels einer Thyristor-Crowbar Schaltung ausgestaltet.

In einer Ausgestaltung ist die Strombegrenzung als Innenwiderstand der Sekundärspule ausgestaltet.

In einer Ausgestaltung ist die Strombegrenzung als Widerstand vor und/oder nach der Spannungsbegrenzung ausgestaltet.

In einer Ausgestaltung umfasst die Sensorschaltung eine zweite Ex-Schaltung auf der, der Ex-Schaltung abgewandten Seite, wobei die zweite Ex-Schaltung als Ausgangsbegrenzungsschaltung ausgestaltet ist. Die zweite Ex-Schaltung als Ausgangsbegrenzung sorgt dafür, dass die normativen Eigensicherheitsanforderungen der Sensorschaltung in Richtung Sensorelement eingehalten werden. Weiterhin sorgt die Ausgangsbegrenzungsschaltung dafür, dass die normativen Eigensicherheitsanforderungen der Sensorschaltung eingehalten werden, wenn durch Fehler des Sensorelements die Sensorschaltung beschädigt werden kann.

In einer Ausgestaltung umfasst diese zweite Ex-Schaltung Begrenzungselemente zur Begrenzung von maximalem Strom mit einer Strombegrenzung und/oder maximaler Spannung mit einer Spannungsbegrenzung und/oder maximaler Leistung mit einer Leistungsbegrenzung.

In einer Ausgestaltung ist die zweite Ex-Schaltung mit der Strombegrenzung als Widerstand ausgestaltet.

In einer Ausgestaltung ist die zweite Ex-Schaltung mit der Spanungsbegrenzung als eine Z-Diode, bevorzugt drei Z-Dioden, ausgestaltet.

In einer Ausgestaltung ist die zweite Ex-Schaltung mit Spanungsbegrenzung als Thyristor-Crowbar-Schaltung ausgestaltet.

Die Aufgabe wird weiter gelöst durch die Verwendung eines Sensors wie oben beschrieben in einem Bereich mit Explosionsgefahren, insbesondere in der Zone 0, 1, 20 oder 21 bzw. Class I Division 1 oder Class II Division 1.

Die Aufgabe wird weiter gelöst durch eine Sensoranordnung, umfassend: einen Sensor nach zumindest einem der vorherigen Ansprüche; und ein Kabel ersten Typs, umfassend eine Kabelschaltung mit der Primärspule, wobei die Primärspule das elektrische Signal mit einer maximalen Leistung an die Sekundärspule überträgt.

In einer Ausgestaltung ist die Sensoranordnung zur Verwendung in einem Bereich mit Explosionsgefahren ausgestaltet. Das Kabel und der Sensor befinden sich somit im Ex-Bereich.

In einer Ausgestaltung umfasst die Sensoranordnung statt des Kabel ersten Typs ein Kabel zweiten Typs, und die Sensoranordnung ist zur Verwendung in einem Bereich mit Explosionsgefahren ausgestaltet. Dadurch, dass der Sensor an sich Ex-technisch betrachtet werden kann und auf seiner Seite Ex-Maßnahmen, insbesondere die Ex-Schaltung, umfasst, können verschiedene Kabel an den Sensor angeschlossen werden. Gemeint sind Kabel verschiedenen Typs. Es muss nicht jede Kombination von Sensor und Kabel an sich Ex-technisch zertifiziert werden. Der Sensor oder das Kabel können in der Ex-Umgebung gewechselt werden. Man muss für einen Wechsel nicht in einen nicht-Ex-Bereich gehen.

Die Aufgabe wird weiter gelöst durch ein Verfahren zum Betreiben eines Sensors in einem Bereich mit Explosionsgefahren, umfassend die Schritte: Übertragen eines elektrischen Signals, wobei das elektrische Signal mit einer maximalen Leistung übertragen wird, an eine Sekundärspule des Sensors; Begrenzen der Spannung des elektrischen Signals auf einen maximalen Wert, wobei das Begrenzen im Sensor stattfindet; und Begrenzen des Stroms des elektrischen Signals auf einen maximalen Wert, wobei das Begrenzen im Sensor stattfindet.

Dies wird anhand der nachfolgenden Figuren näherer erläutert.

Fig. 1 zeigt eine schematische Übersicht über die beanspruchte Sensoranordnung.

Fig. 2 zeigt eine schematische Übersicht über den beanspruchten Sensor.

In den Figuren sind gleiche Merkmale mit gleichen Bezugszeichen gekennzeichnet.

Wie erwähnt ist die Aufgabe, die Sekundärseite von der Primärseite Ex-technisch zu entkoppeln. Dies wird erreicht durch Begrenzung der Eingangsparameter der Sekundärseite auf der Sekundärseite selbst. Unter dieser Voraussetzung ist es möglich, eine Ex-Schnittstelle direkt in die induktive Kopplung zu "legen".

Grundsätzlich kann ein Gerät als "eigensicheres Gerät" auf zwei verschiedene Arten zertifiziert werden: als System oder über Parameter. Bei einer Zertifizierung über das System an sich spezifiziert die Prüfstelle (Zertifizierungsstelle) jede Komponente und bewertet schließlich das gesamte System. Eine Abweichung einer Komponente von der entsprechenden Norm führt zum Erlöschen der Zulassung. Im Gegensatz dazu ist eine parametrische Genehmigung eine, bei der die Prüfstelle jedes Gerät an sich einzeln bewertet und ihm einen Satz von Sicherheits- oder so genannten Entitätsparametern zuweist.

Für die induktive Kopplung mittels einer Primärspule L1 und einer Sekundärspule L2 lässt sich als Entity-Parameter die Ausgangsleistung Po an der Primärspule L1 bzw. die Eingangsleistung Pi an der Sekundärspule L2 verwenden, weil die Leistungsübertragung als solche messbar und konstant ist. Es gilt: $Pi \geq Po$. Das bedeutet, dass die Kabelelektronik (Primärseite) eine maximale Ausgangsleistung Po und die Sensorelektronik eine entsprechende Eingangsleistung Pi besitzt. Die Ausgangsleistung Po der Kabelelektronik ist unabhängig von der Sekundärseite und wird auch ohne diese ermittelt bzw. berechnet. Die Eingangsleistung Pi der Sensorelektronik orientiert sich an der Ausgangsleistung Po und ist mindestens gleich groß oder größer als die Ausgangsleistung Po. Die maximale Ausgangsleistung Po ist somit kleiner als die Eingangsleistung Pi.

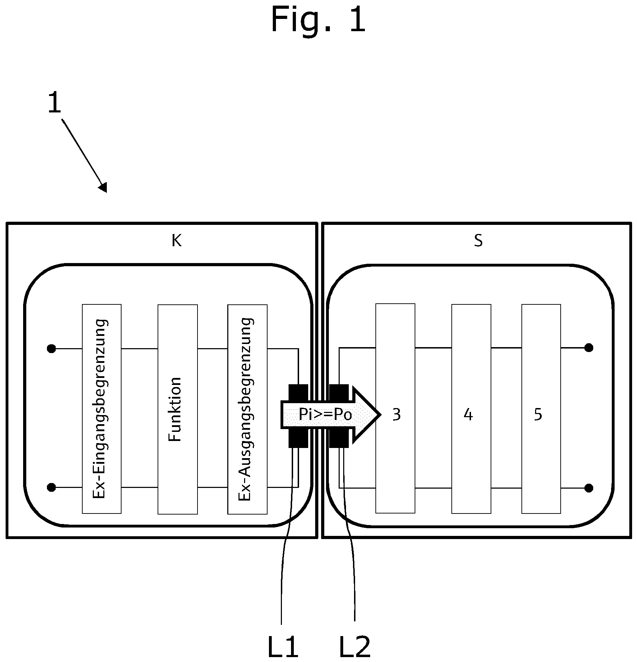

Fig. 1 zeigt die schematische Übersicht der Sensoranordnung mit der Kabelseite K, welcher der Primärseite P entspricht und der Sensorseite S, welche der Sekundärseite entspricht. Durch eine Ex-Schaltung 3 auf Sekundärseite wird nur durch sekundärseitige Maßnahmen erreicht, dass die Sekundärseite S, also der Sensor, im Ex-Bereich eingesetzt werden kann.

Die ausschließliche sensorseitige Betrachtung aller funktionalen und Extechnischen Parameter erlaubt es, dass z. B. die Windungszahl oder die Art der Sekundärspule den sensorspezifischen Gegebenheiten angepasst werden kann. So kann die Windungszahl verringert werden, um zum Beispiel die Verlustleistung beim Stabilisieren der sekundären Gleichspannung zu verringern. Es ist auch denkbar, eine Sekundärspule mit Mittelanzapfung zu verwenden, um evtl. die Energieabnahme für die positive und negative halbwelle zu optimieren oder von der Kommunikation zu entkoppeln. Diese Maßnahmen resultieren in einer Optimierung der eigentlichen Sensorfunktionalität und ermöglichen somit eine genauere bzw. präzisere Messung der Primärmessgröße (pH-Wert, Leitfähigkeit usw.) und/oder der Sekundärmessgröße (Temperatur usw.). Dies wird dadurch erreicht, weil mehr Abtastungen zur Digitalisierung der Messgröße möglich sind, eine höhere Rechenleistung des verwendeten Mikrokontrollers (z. B. durch höhere Prozessortaktung) möglich ist, genauere und/oder rauschärmere OPVs eingesetzt werden können, ein höherer Messstrom gespeist werden kann und ein höherer schaltungstechnischer Aufwand getrieben werden kann.

Aus Sensorsicht (in Richtung Kabel gesehen) ist die Primärseite unbekannt. Das bedeutet, dass sowohl funktionstechnische Parameter (z. B. Windungsverhältnis), als auch Ex-technische Parameter auf der Sensorelektronik behandelt bzw. begrenzt werden müssen. Folgende begrenzende Schaltungsteile müssen vorhanden sein, damit die weitere Berechnung der Eigensicherheit des Sensors erfolgen kann: Spannungsbegrenzung und Strombegrenzung.

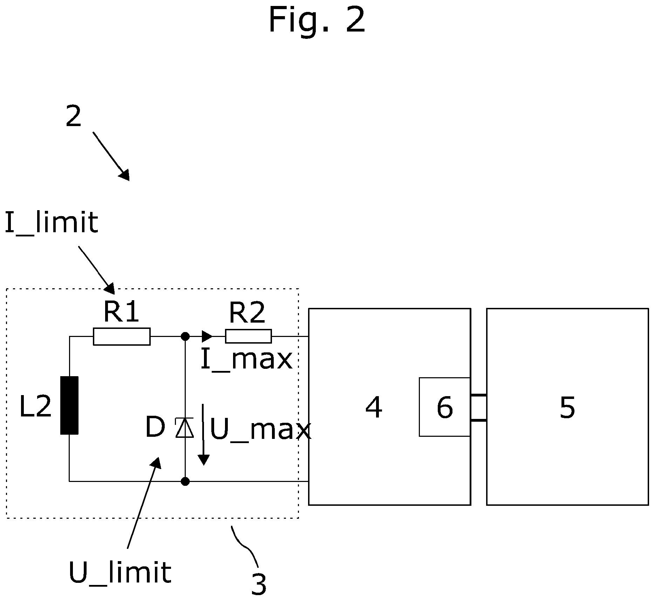

Die Fig. 2 zeigt schematisch, wie und wo die Ex-Begrenzungsschaltungen angeordnet sind. Die Sekundärspule L 2 empfängt ein elektrisches Signal der Primärseite P. Die Begrenzungsschaltung 3 begrenzen dieses elektrische Signal auf festgelegte Werte so, dass die Sensorschaltung 4 mit definierten Maximalwerten für Spannung U_max und Strom I_max beaufschlagt wird. Diese Maximalwerte werden weiterhin benötigt, um die Eigensicherheit der Sensorschaltung 4 zu berechnen.

Die Sensorschaltung 4 umfasst den funktionalen Teil des Sensors 2. Die Schaltung umfasst dazu etwa einen oder mehrere Mikrokontroller und ein oder mehrere Speicher. Die Sensorschaltung 4 umfasst auch einen Modulator und/oder einen Demodulator. Dadurch werden Daten auf das elektrische Signal aufgeprägt, etwa moduliert bzw. es werden Daten aus dem elektrischen Signal demoduliert.

Die Sensorschaltung 4 umfasst eine zweite Ex-Schaltung 6 welche die Sensorschaltung 4 ausgangsseitig begrenzt. Die Ex-Schaltung 6 umfasst zumindest eine Strombegrenzung und/oder eine Spannungsbegrenzung. Die zweite Ex-Schaltung 6 als Ausgangsbegrenzung sorgt dafür, dass die normativen Eigensicherheitsanforderungen der Sensorschaltung in Richtung Sensorelement eingehalten werden. Weiterhin sorgt die Ausgangsbegrenzungsschaltung dafür, dass die normativen Eigensicherheitsanforderungen der Sensorschaltung eingehalten werden, wenn durch Fehler des Sensorelements die Sensorschaltung beschädigt werden kann. Ausgestaltungen der Ex-Schaltung 6 umfassen einen Widerstand, ein oder drei Z-Dioden oder eine Thyristor-Crowbar-Schaltung.

Das Sensorelement 5 ist zur Erfassung einer Messgröße ausgestaltet. Dies können etwa der pH-Wert oder die Leitfähigkeit sein. Weitere Kenngrößen sind etwa das Redoxpotentials, die Absorption von elektromagnetischen Wellen im Medium, beispielsweise mit Wellenlängen im UV-, IR-, und/oder sichtbaren Bereich, Sauerstoffkonzentration, Trübung, Konzentration von nichtmetallischen Werkstoffen u. a. Andere für die korrekte Bestimmung dieses Wertes notwendigen Messwerte, wie etwa die Temperatur, sollen auch unter den Begriff "Sensorelement 5" fallen.

Die Strombegrenzung I_limit kann ein eigenständiges Bauteil sein, z. B. ein Widerstand R1 oder R2 oder R1 und R2, die "vor" oder "nach" der Spannungsbegrenzung angeordnet sind. Der Widerstand R1, R2 ist somit in Reihe mit der Sekundärspule L2 geschaltet. Wird nur ein Widerstand R1 oder R2 verwendet, kann dieser vor oder nach dem Knoten für die Spannungsbegrenzung U_limit angeordnet sein. Alternativ oder zusätzlich kann dafür auch der Innenwiderstand der Sekundärspule L2 verwendet, wenn diese ein nichtstöranfälliges Bauteil nach Ex-Norm ist. Der maximale Strom I_max ergibt sich aus der Berechnung:

$$I_{max} = \frac{Pi}{R}$$

Die Größe "R" in der Formel ist dabei die Summe aller Widerstände, also etwa R1+R2+R_(Innenwiderstand der Spule L2).

Die Spannungsbegrenzung U_limit kann im einfachsten Fall mit einer Z-Diodenschaltung D ausgeführt werden. Bevorzugt werden drei parallelgeschaltete Dioden verwendet. Hierbei ergibt sich die maximale Spannung durch die Z-Spannung plus Toleranzen (z. B. Bauteil, Temperatur). Die Z-Dioden sind so ausgelegt, dass die Sperrspannung, also die Spannung an der Spannungsbegrenzung, höher ist als die Eingangsspannung der Sensorschaltung 4. Dies ist vorteilhaft, da ab einer gewissen Sperrspannung, der Durchbruchspannung, der Strom durch die Diode unerwünscht um viele Größenordnungen ansteigt und Verlustleistung hervorruft.

Es sind aber auch andere Schaltungsdesigns möglich, wie zum Beispiel eine Crowbar-Schaltung (beim Erkennen einer Überspannung, wird sofort ein Querpfad geöffnet und die Spannung Richtung 0 V gezogen).

Es ergibt sich somit ein eigenständiges Ex-Design auf der Sensorseite so lange die Ausgangsleistung unter der Eingangsleistung liegt.

Damit sind Änderungen an Standardparametern, wie z. B. dem Windungsverhältnis der Spulen L1, L2 auch unter Ex-Bedingungen möglich.

Jeder einzelne Sensortyp kann technisch auf seine Aufgabe optimiert werden, ohne Rücksicht auf vorhandene Parametersets.

Weiter sind alle Sensoren, die im Ex-Bereich zugelassen sind, an eine Primärseite anschließbar. Dabei spielt es keine Rolle, wer der Hersteller des Sensors ist.

**Bezugszeichenliste**

| | |
|---|---|
| 1 | Sensoranordnung |
| 2 | Sensor |
| 3 | Ex-Schaltung |
| 4 | Sensorschaltung |
| 5 | Sensorelement |
| 6 | zweite Ex-Schaltung |
| D | Diode |
| I_limit | Strombegrenzung |
| I_max | maximaler Eingangsstrom |
| L1 | Primärspule |
| L2 | Sekundärspule |
| K | Kabelseite |
| Pi | Leistung an L2 |
| Po | Leitung an L1 |
| R1 | Widerstand |
| R2 | Widerstand |
| S | Sensorseite |
| U_limit | Spannungsbegrenzung |
| U_max | maximale Eingangsspannung |

**Patentansprüche**

1. Sensoranordnung (1), umfassend

    einen Sensor (2), umfassend

        - zumindest ein Sensorelement (5), das zumindest eine Messgröße erfasst, wobei das Sensorelement (5) in elektrischem Kontakt mit einer Sensorschaltung (4) steht,
        - die Sensorschaltung (4), die von Daten von einer Sekundärspule (L2) und/oder von der Messgröße abgeleitete Werte verarbeitet,

        wobei die Sensorschaltung (4) in elektrischem Kontakt mit einer Ex-Schaltung (3) steht,
        wobei die Sensorschaltung (4) mit einer maximalen Eingangsspannung (U_max) und einem maximalen Eingangsstrom (I_max) beaufschlagt wird, und

        - die Ex-Schaltung (3), umfassend

            ■ die Sekundärspule (L2), die ein elektrisches Signal von einer der Sekundärspule (L2) zugeordneten Primärspule (L1) empfängt,

wobei das elektrische Signal die, insbesondere auf das elektrische Signal aufgeprägte, insbesondere aufmodulierte, Daten umfasst,

- eine Spannungsbegrenzung (U_limit), welche die Spannung des elektrischen Signals auf die maximale Eingangsspannung (U_max) der Sensorschaltung (4) begrenzt, und

- eine Strombegrenzung (I_limit), welche den Strom des elektrischen Signals auf den maximalen Eingangsstrom (I_max) der Sensorschaltung (4) begrenzt; und

ein Kabel (K) ersten Typs, umfassend eine Kabelschaltung mit der Primärspule (L1), wobei die Primärspule (L1) das elektrische Signal mit einer maximalen Leistung (Po) an die Sekundärspule (L2) überträgt,

wobei die Primärspule (L1) und die Sekundärspule (L2) ein induktive Kopplung bilden und die induktive Kopplung eine Ex-Schnittstelle bildet um den Sensor (2) Ex-technisch vom Kabel (K) zu entkoppeln.

2. Sensoranordnung (1), nach Anspruch 1, wobei mittels der maximalen Eingangsspannung (U_max) und des maximalen Eingangsstroms (I_max) die Eigensicherheit der Sensorschaltung (4) ausgelegt ist.

3. Sensoranordnung (1), nach Anspruch 1 oder 2, wobei die Spannungsbegrenzung (U_limit) zumindest eine Diode (D), bevorzugt drei Dioden, umfasst.

4. Sensoranordnung (1), nach zumindest einem der vorherigen Ansprüche, wobei die Spannungsbegrenzung (U_limit) mittels einer Thyristor-Crowbar Schaltung ausgestaltet ist.

5. Sensoranordnung (1), nach zumindest einem der vorherigen Ansprüche, wobei die Strombegrenzung (I_limit) als Innenwiderstand der Sekundärspule (L2) ausgestaltet ist.

6. Sensoranordnung (1), nach zumindest einem der vorherigen Ansprüche, wobei die Strombegrenzung (I_limit) als Widerstand (R1, R2) vor und/oder nach der Spannungsbegrenzung (U_limit) ausgestaltet ist.

7. Sensoranordnung (1), nach zumindest einem der vorherigen Ansprüche, wobei die Sensorschaltung (4) eine zweite Ex-Schaltung (6) auf der, der Ex-Schaltung (3) abgewandten Seite, umfasst, wobei die zweite Ex-Schaltung (6) als Ausgangsbegrenzung ausgestaltet ist.

8. Verwendung einer Sensoranordnung nach zumindest einem der vorherigen Ansprüche in einem Bereich mit Explosionsgefahren, insbesondere in der Zone 0, 1, 20 oder 21 bzw. Class I Division 1 oder Class II Division 1.

9. Sensoranordnung (1) nach Anspruch 1 wobei die Sensoranordnung (1) ein Kabel ersten Typs oder ein Kabel zweiten Typs umfasst, und die Sensoranordnung (1) zur Verwendung in einem Bereich mit Explosionsgefahren ausgestaltet ist.

10. Verfahren zum Betreiben einer Sensoranordnung (1) nach einem der Ansprüche 1-7 oder 9 mit einem Sensor (2) in einem Bereich mit Explosionsgefahren, umfassend die Schritte:

- Übertragen eines elektrischen Signals, wobei das elektrische Signal mit einer maximalen Leistung (Po) übertragen wird, an eine Sekundärspule (L2) des Sensors (2),
- Begrenzen der Spannung des elektrischen Signals auf einen maximalen Wert (U_max), wobei das Begrenzen im Sensor (2) stattfindet, und
- Begrenzen des Stroms des elektrischen Signals auf einen maximalen Wert (I_max), wobei das Begrenzen im Sensor (2) stattfindet.

## Claims

1. Sensor arrangement (1) comprising

a sensor (2) comprising

- at least a sensor element (5), which detects at least one measured variable, wherein the sensor element (5) is in electrical contact with a sensor circuit (4),
- the sensor circuit (4), which processes values derived from data from a secondary coil (L2) and/or values derived from the measured variable,

wherein the sensor circuit (4) is in electrical contact with an Ex circuit (3), wherein the sensor circuit (4) is subjected to a maximum input voltage (U_max) and to a maximum input current (I_max), and
- the Ex circuit (3), comprising

• the secondary coil (L2), which receives an electrical signal from a primary coil (L1) assigned to the secondary coil (L2), wherein the electrical signal comprises the data, particularly modulated data, particularly data superimposed on the electrical signal,
• a voltage limitation (U_limit), which limits the voltage of the electrical signal to the maximum input voltage (U_max) of the sensor circuit (4), and
• a current limitation (I_limit), which limits the current of the electrical signal to the maximum input current (I_max) of the sensor circuit (4); and

a cable (K) of a first type, which comprises a cable circuit with the primary coil (L1), wherein the primary coil (L1) transmits the electrical signal with a maximum power (Po) to the secondary coil (L2), wherein the primary coil (L1) and the secondary coil (L2) form an inductive coupling and the inductive coupling forms an Ex interface for the Ex-specific decoupling of the sensor (2) from the cable (K).

2. Sensor arrangement (1) as claimed in Claim 1, wherein the intrinsic safety of the sensor circuit (4) is designed by means of the maximum input voltage (U_max) and the maximum input current (I_max).

3. Sensor arrangement (1) as claimed in Claim 1 or 2, wherein the voltage limitation (U_limit) at least comprises a diode (D), preferably three diodes.

4. Sensor arrangement (1) as claimed in at least one of the previous claims, wherein the voltage limitation (U_limit) is implemented by means of a thyristor crowbar circuit.

5. Sensor arrangement (1) as claimed in at least one of the previous claims, wherein the current limitation (I_limit) is designed as an internal resistor of the secondary coil (L2).

6. Sensor arrangement (1) as claimed in at least one of the previous claims, wherein the current limitation (I_limit) is designed as a resistor (R1, R2) upstream and/or downstream from the voltage limitation (U_limit).

7. Sensor arrangement (1) as claimed in at least one of the previous claims, wherein the sensor circuit (4) comprises a second Ex circuit (6) on the side facing away from the Ex circuit (3), wherein the second Ex circuit (6) is designed as an output limitation.

8. Use of a sensor arrangement (1) as claimed in at least one of the previous claims in a zone with explosion hazards, particularly in Zone 0, 1, 20 or 21 or Class I Division 1 or Class II Division 1.

9. Sensor arrangement (1) as claimed in Claim 1, wherein the sensor arrangement (1) comprises a cable of a first type or a cable of a second type, and wherein the sensor arrangement (1) is designed to be used in a zone with explosion hazards.

10. Procedure for the operation of a sensor arrangement (1) as claimed in one of the Claims 1 to 7 or 9 with a sensor (2) in a zone with explosion hazards, wherein said procedure comprises the following steps:

- Transmission of an electrical signal, wherein the electrical signal is transmitted with a maximum power (Po) to a secondary coil (L2) of the sensor (2),
- Limitation of the voltage of the electrical signal to a maximum value (U_max), wherein the limitation takes place in the sensor (2), and
- Limitation of the current of the electrical signal to a maximum value (I_max), wherein the limitation takes place in the sensor (2).

**Revendications**

1. Arrangement de capteur (1) comprenant

un capteur (2) comprenant

- au moins un élément de capteur (5), lequel élément détecte au moins une grandeur de mesure, l'élément de capteur (5) étant en contact électrique avec un circuit de capteur (4),
- le circuit de capteur (4), lequel circuit traite des données provenant d'une bobine secondaire (L2) et/ou des valeurs dérivées de la grandeur de mesure, le circuit de capteur (4) étant en contact électrique avec un circuit Ex (3), le circuit de capteur (4) étant soumis à une tension d'entrée maximale (U_max) et à un courant d'entrée maximal (I_max), et
- le circuit Ex (), comprenant

• la bobine secondaire (L2), qui reçoit un signal électrique d'une bobine primaire (L1) associée à la bobine secondaire (L2), le signal électrique comprenant les données, notamment modulées, superposées sur le signal électrique,
• une limitation de tension (U_limit), laquelle limite la tension du signal électrique à la tension d'entrée maximale (U_max) du circuit de capteur (4), et
• une limitation de courant (I_limit), laquelle limite le courant du signal électrique au courant d'entrée maximal (I_max) du circuit de capteur (4) ; et

un câble (K) d'un premier type, lequel câble comprend un circuit de câble avec la bobine primaire (L1), la bobine primaire (L1) transmettant le signal électrique avec une puissance maximale (Po) à la bobine secondaire (L2), la bobine primaire (L1) et la bobine secondaire (L2) formant un couplage inductif et le couplage inductif formant une interface Ex destinée à découpler le capteur (2) du câble (K).

2. Arrangement de capteur (1) selon la revendication 1, pour lequel la sécurité intrinsèque du circuit de capteur (4) est conçue au moyen de la tension d'entrée maximale (U_max) et du courant d'entrée maximal (I_max).

3. Arrangement de capteur (1) selon la revendication 1 ou 2, pour lequel la limitation de tension (U_limit) comprend au moins une diode (D), de préférence trois diodes.

4. Arrangement de capteur (1) selon l'une des revendications précédentes, pour lequel la limitation de tension (U_limit) est réalisée au moyen d'un circuit thyristor crowbar.

5. Arrangement de capteur (1) selon l'une des revendications précédentes, pour lequel la limitation de courant (I_limit) est conçue en tant que résistance interne de la bobine secondaire (L2).

6. Arrangement de capteur (1) selon l'une des revendications précédentes, pour lequel la limitation de courant (I_limit) est conçue en tant que résistance (R1, R2) avant et/ou après la limitation de tension (U_limit).

7. Arrangement de capteur (1) selon l'une des revendications précédentes, pour lequel le circuit de capteur (4) comprend un deuxième circuit Ex (6) sur le côté opposé au circuit Ex (3), le deuxième circuit Ex (6) étant conçu en tant que limitation de sortie.

8. Utilisation d'un arrangement de capteur (1) selon l'une des revendications précédentes dans une zone présentant des risques d'explosion, notamment dans la Zone 0, 1, 20 ou 21 ou Classe I Division 1 ou Classe II Division 1.

9. Arrangement de capteur (1) selon la revendication 1, pour lequel l'arrangement de capteur (1) comprend un câble d'un premier type ou un câble d'un deuxième type, l'arrangement de capteur (1) étant conçu pour être utilisé dans une zone présentant des risques d'explosion.

10. Procédé destiné à l'exploitation d'un arrangement de capteur (1) selon l'une des revendications 1 à 7 ou 9 avec un capteur (2) dans une zone présentant des risques d'explosion, lequel procédé comprend les étapes suivantes :

    - Transmission d'un signal électrique, le signal électrique étant transmis avec une puissance maximale (Po) à une bobine secondaire (L2) du capteur (2),
    - Limitation de la tension du signal électrique à une valeur maximale (U_max), la limitation ayant lieu dans le capteur (2), et
    - Limitation du courant du signal électrique à une valeur maximale (I_max), la limitation ayant lieu dans le capteur (2).

# Fig. 1

1

| K | S |
|---|---|

Ex-Eingangsbegrenzung

Funktion

Ex-Ausgangsbegrenzung

Pi>=Po

3

4

5

L1    L2

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19719730
- DE 102006056175